# EUROPEAN PATENT APPLICATION

(11) **EP 4 439 772 A1**
(43) Date of publication of application: **02.10.2024**
(21) Application number: 21965192.4
(22) Date of filing: 26.11.2021
(51) Int. Cl.: H01M 10/0587

(54) **ELECTRODE ASSEMBLY, AND BATTERY AND ELECTRONIC DEVICE COMPRISING SAME**

(71) Applicant: Ningde Amperex Technology Ltd., Ningde, Fujian 352106 (CN)
(72) Inventor: DONG, Yuyang, Ningde, Fujian 352106 (CN); YAN, Dongyang, Ningde, Fujian 352106 (CN); ZENG, Qiao, Ningde, Fujian 352106 (CN)
(74) Representative: Klunker IP Patentanwälte PartG mbB
(86) International application number: PCT/CN2021/133557
(87) International publication number: WO 2023/092458

(57) **Abstract**

This application discloses an electrode assembly formed by winding a stack. The stack includes a first conductive layer, a second conductive layer, and a first layer disposed between the first conductive layer and the second conductive layer and including an insulating material. The stack further includes a first surface, a first end portion, and a second end portion located opposite to the first end portion. A stacking direction of the stack is a first direction. Viewed along the first direction, the first surface has, in a second direction perpendicular to the first direction, a first region located on one side of the first end portion and a second region located on the other side of the first end portion. In a winding direction of the stack, the first region is closer to the first end portion than the second region. The first region includes a first zone and a second zone. The first zone is covered by the second layer including the insulating material and further includes a third end portion located on a first side of the first end portion in the second direction. The second zone is located between the first end portion and the third end portion, and the second zone is apart from the second layer.

## Description

### TECHNICAL FIELD

This application relates to the field of energy storage apparatuses, and in particular to an electrode assembly and a battery and electronic apparatus including such electrode assembly.

### BACKGROUND

Currently, terminal devices that utilize electric energy as their functional means are moving toward mobility and portability. However, portable devices may experience physical damage during use, such as impact, extrusion, drop, and other accidents, which may cause the fixing adhesive layer at the tail of the battery cell to open, resulting in the failure of the battery cell.

### SUMMARY

One purpose of this application is to provide an electrode assembly that can reduce the risk of detachment of a third layer.

A first aspect of this application provides an electrode assembly formed by winding a stack. The electrode assembly includes a first metal plate electrically connected to the stack. The stack includes a first conductive layer, a second conductive layer, and a first layer disposed between the first conductive layer and the second conductive layer and including an insulating material. The stack further includes a first surface, a first end portion, and a second end portion located opposite to the first end portion. A direction perpendicular to a surface of the first metal plate is defined as a first direction. Viewed along the first direction, the first surface has, in a second direction perpendicular to the first direction, a first region on a first side of the first end portion and a second region on a second side of the first end portion. In a winding direction of the stack, the first region is closer to the first end portion than the second region. The first region includes a first zone and a second zone, the first zone being covered by the second layer including the insulating material. The first region further includes a third end portion located on the first side of the first end portion in the second direction, where the second zone is located between the first end portion and the third end portion, and the second zone is apart from the second layer.

In this application, the second zone not covered by the second layer is disposed on the first region of the first surface of the electrode assembly such that the third layer can be attached to the second zone, enhancing the adhesive force and reducing the risk of detachment of the third layer. Furthermore, arrangement of the second zone reduces the thickness of the stack and decreases the loss of energy density.

According to some embodiments of this application, the second zone is located between the first end portion and the first zone in the second direction.

According to some embodiments of this application, the second zone extends from the first end portion in the second direction.

According to some embodiments of this application, viewed along the first direction, in a third direction perpendicular to the second direction, the first region has a fourth end portion and a fifth end portion located opposite to the fourth end portion.

According to some embodiments of this application, the second zone has a portion extending from the fourth end portion to the fifth end portion in the third direction.

According to some embodiments of this application, the second zone has a portion apart from the fourth end portion or the fifth end portion in the third direction.

According to some embodiments of this application, the electrode assembly further includes a third layer including an insulating material, is the third layer being disposed on the first surface. Viewed along the first direction, the third layer is connected to the first region and the second region and has an overlapping portion with the first end portion. The third layer is disposed such that the first end portion is fastened to the first surface, thereby reducing the risk of the stack being pulled apart by internal forces.

According to some embodiments of this application, viewed along the first direction, the third layer has an overlapping portion with the second zone.

According to some embodiments of this application, the electrode assembly further includes a first metal plate, the first metal plate being connected to the first conductive layer. Viewed along the first direction, the first metal plate has an overlapping portion with the fifth end portion.

According to some embodiments of this application, the third layer includes a sixth end portion located on the side of the third end portion in the second direction, and the second zone includes a seventh end portion located on the side of the third end portion in the second direction, where a first distance from the sixth end portion to the third end portion is shorter than a second distance from the seventh end portion to the third end portion.

According to some embodiments of this application, viewed along the first direction, in a third direction perpendicular to the second direction, the first region has a fourth end portion and a fifth end portion located opposite to the fourth end portion.

According to some embodiments of this application, the third layer further includes, in the third direction, an eighth end portion located on the side of the fourth end portion and a ninth end portion located on the side of the fifth end portion, where a third distance from the eighth end portion to the fourth end portion is shorter than a fourth distance from the ninth end portion to the fifth end portion.

According to some embodiments of this application, the electrode assembly further includes, in the first direction, a second surface opposite to the first surface and a fourth layer extending from the first surface through the fifth end portion to the second surface. Disposing the fourth layer can further fasten the stack, reducing the risk of the stack being pulled apart by internal forces, and further reducing the risk of detachment of the third layer.

According to some embodiments of this application, viewed along the first direction, the third layer has an overlapping portion with the fourth layer in the third direction.

According to some embodiments of this application, viewed along the first direction, at least a portion of the fourth layer is connected to the first end portion.

According to some embodiments of this application, at least a portion of the fourth layer is connected to the second zone.

According to some embodiments of this application, the electrode assembly further includes a fifth layer disposed in the second region, with both sides of the fifth layer provided with an adhesive layer.

According to some embodiments of this application, the fifth layer is apart from both the first end portion and the third layer.

According to some embodiments of this application, the electrode assembly further includes, in the first direction, a second surface opposite to the first surface and a fourth layer extending from the first surface through the fifth end portion to the second surface, the fifth layer being apart from the fourth layer.

According to some embodiments of this application, the first zone is disposed between the first end portion and the second zone in the second direction.

According to some embodiments of this application, the first surface further includes a second coating zone covered by the second layer and apart from the first zone, and the second zone is disposed between the first zone and the second coating zone in the second direction.

According to some embodiments of this application, the first conductive layer includes at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadium phosphate, a lithium-rich manganese-based material, lithium nickel cobalt aluminum oxide, or lithium titanium oxide.

According to some embodiments of this application, the second layer includes a ceramic material and a binder.

According to some embodiments of this application, the third layer includes a substrate and an adhesive layer disposed on the substrate.

According to some embodiments of this application, the substrate includes at least one of polyethylene terephthalate, polyimide, polyvinyl chloride, polypropylene, polyethylene, and a combination thereof, and the adhesive layer includes at least one of acrylic ester, polyurethane, rubber, or silicone gel.

A second aspect of this application further provides a battery, including any one of the electrode assemblies mentioned above and a housing enveloping the electrode assembly, where the first metal plate protrudes from an end of the housing.

A third aspect of this application further provides an electronic apparatus including the foregoing battery.

### BRIEF DESCRIPTION OF DRAWINGS

The above and/or additional aspects and advantages of this application will become obviously easy to understand from the description of some embodiments with reference to the following drawings.
FIG. 1A is a top view of a battery according to an embodiment of this application;
FIG. 1B is a schematic structural diagram of the battery shown in FIG. 1A without packaging;
FIG. 2A is a schematic cross-sectional view of an electrode assembly according to an embodiment of this application;
FIG. 2B is an enlarged view of block IIB in FIG. 2A;
FIG. 2C is an enlarged view of block IIC in FIG. 2A;
FIG. 3 is a top view of the electrode assembly shown in FIG. 2A;
FIG. 4 is a top view of an electrode assembly according to an embodiment of this application;
FIG. 5 is a top view of an electrode assembly according to another embodiment of this application;
FIG. 6 is a schematic cross-sectional view of a first conductive layer of the electrode assembly shown in FIG. 2A being unwound;
FIG. 7 is a schematic cross-sectional view of a second conductive layer of the electrode assembly shown in FIG. 2A being unwound;
FIG. 8 is a schematic cross-sectional view of a third layer according to an embodiment of this application;
FIG. 9 is a top view of an electrode assembly according to an embodiment of this application;
FIG. 10A is a top view of an electrode assembly according to an embodiment of this application;
FIG. 10B is a bottom view of the electrode assembly shown in FIG. 10A;
FIG. 10C is a right side view of the electrode assembly shown in FIG. 10A;
FIG. 11 is a schematic diagram of a reverse side of the electrode assembly shown in FIG. 10A;
FIG. 12 is a top view of an electrode assembly according to an embodiment of this application;
FIG. 13A is a top view of an electrode assembly according to an embodiment of this application;
FIG. 13B is a top view of an electrode assembly according to an embodiment of this application;
FIG. 14 is a schematic cross-sectional view of an eighth layer according to an embodiment of this application;
FIG. 15 is a top view of an electrode assembly according to an embodiment of this application;
FIG. 16 is a schematic structural diagram of an electronic apparatus according to an embodiment of this application; and
FIG. 17 is a top view of an electrode assembly according to Comparative Example 1 of this application.

Reference signs of main components:

| | |
|---|---|
| battery | 100 |
| housing | 20 |
| first metal plate | 101 |
| second metal plate | 102 |
| stack | 11 |
| first conductive layer | 111 |
| second conductive layer | 112 |
| first layer | 113 |
| first portion | 201 |
| second portion | 202 |
| accommodation space | 203 |
| first surface | 110 |
| first end portion | 11a |
| second surface | 120 |
| first region | 110a |
| second region | 110b |
| first zone | 21 |
| second zone | 22 |
| second layer | 12 |
| third end portion | 11c |
| first metal layer | 111a |
| first conductive material layer | 111b |
| first surface | 31a |
| second surface | 31b |
| seventh layer | 17 |
| second metal layer | 112a |
| second conductive material layer | 112b |
| third layer | 13 |
| substrate | 131, 181 |
| adhesive layer | 133, 183 |
| sixth layer | 16 |
| fourth end portion | 11d |
| fifth end portion | 11e |
| sixth end portion | 11f |
| seventh end portion | 11g |
| eighth end portion | 11h |
| ninth end portion | 11i |
| tenth end portion | 11j |
| eleventh end portion | 11k |
| twelfth end portion | 11m |
| thirteenth end portion | 11n |
| fourteenth end portion | 11p |
| fifteenth end portion | 11r |
| sixteenth end portion | 11s |
| seventeenth end portion | 11t |
| fourth layer | 14a, 14b |
| fifth layer | 15 |
| eighth layer | 18 |
| third zone | 23 |
| electronic apparatus | 200 |
| main body | 220 |
| first end | 12a |
| second end | 12b |
| third end | 12c |

### DETAILED DESCRIPTION

The following clearly and detailedly describes the technical solutions in some embodiments of this application. Apparently, the described embodiments are some rather than all of the embodiments of this application. Unless otherwise defined, all technical and scientific terms used herein shall have the same meanings as commonly understood by those skilled in the art to which this application belongs. The terms used in the specification of this application are merely intended to describe specific embodiments but not intended to constitute any limitation on this application.

The following describes some embodiments of this application in detail. However, this application may be embodied in many different implementations and should not be construed as being limited to the example embodiments set forth herein. Rather, these example embodiments are provided such that this application can be conveyed to those skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected to the element B or an intervening element C may be present therebetween such that the element A and the element B are indirectly connected to each other.

Further, the use of "may" when describing embodiments of this application relates to "one or more embodiments of this application."

The terminology used herein is merely intended to describe specific embodiments but not intended to constitute any limitation on this application. As used herein, the singular forms are intended to include the plural forms as well, unless the context clearly indicates otherwise. It should be further understood that the terms "comprise" or "include" and variations thereof, when used in this specification, specify the presence of stated features, numbers, steps, operations, elements, and/or components but do not preclude the presence or addition of one or more other features, numbers, steps, operations, elements, components, and/or groups thereof.

Spatial terms such as "above" may be used herein for ease of description to describe the relationship between one element or feature and another element (a plurality of elements) or feature (a plurality of features) as illustrated in the drawings. It should be understood that spatial terms are intended to encompass different orientations of a device or apparatus in use or operation in addition to the orientations depicted in the drawings. For example, if the device in the drawings is turned over, elements described as "above" or "over" other elements or features would then be oriented "below" or "beneath" the other elements or features. Thus, the example term "above" can encompass both orientations of above and below. It should be understood that although the terms first, second, third, or the like may be used herein to describe various elements, components, zones, layers, and/or portions, these elements, components, zones, layers, and/or portions should not be limited by these terms. These terms are used to distinguish one element, component, region, layer, or portion from another element, component, region, layer, or portion. Therefore, a first element, component, region, layer, or portion discussed below may be referred to as a second element, component, region, layer, or portion without departing from the teachings of the example embodiments.

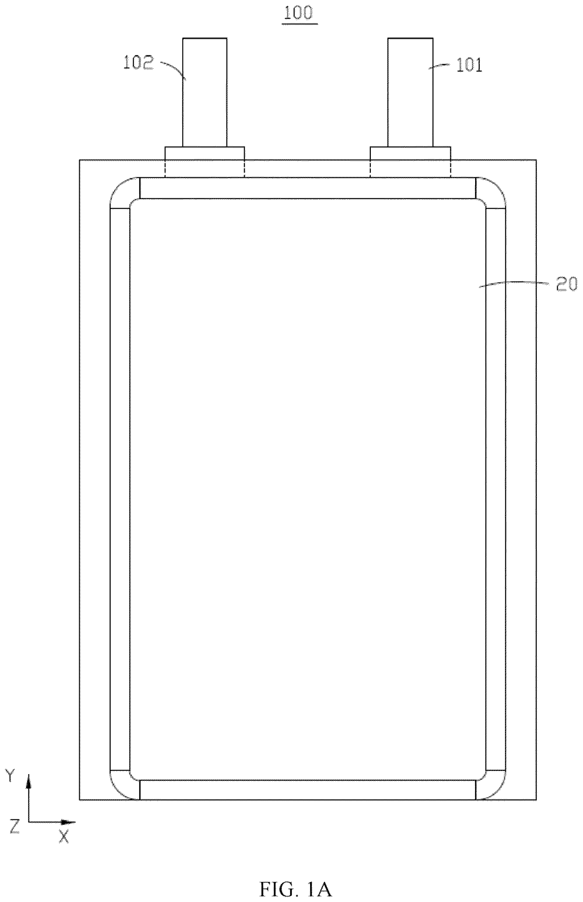

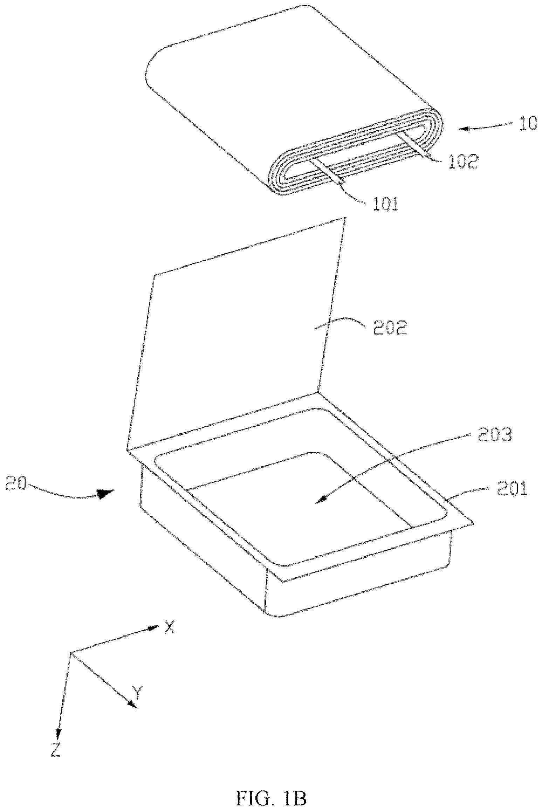

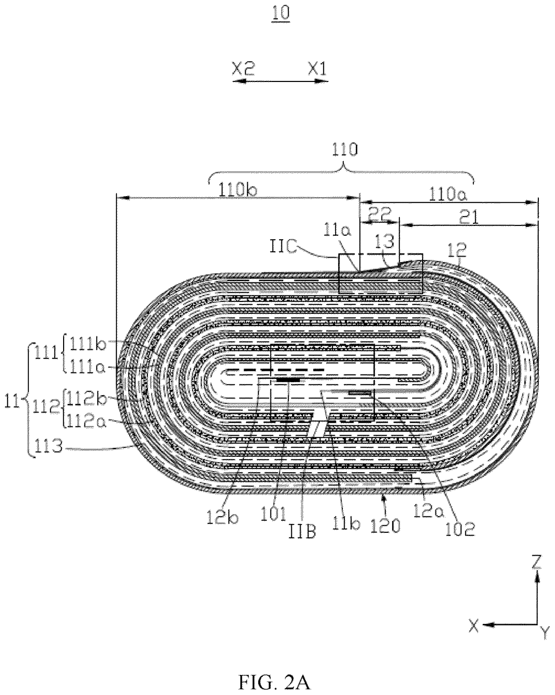

Refer to FIG. 1A and FIG. 1B. An embodiment of this application provides a battery 100 including an electrode assembly 10 and a housing 20 accommodating the electrode assembly 10. A first metal plate 101 and a second metal plate 102 of the electrode assembly 10 extend from one end of the housing 20 to connect external components. The first metal plate 101 and the second metal plate 102 are both electrically connected to a stack 11. Also refer to FIG. 2A. The electrode assembly 10 is formed by winding the stack 11. The stack 11 includes a first conductive layer 111, a second conductive layer 112, and a first layer 113 disposed between the first conductive layer 111 and the second conductive layer 112. The first conductive layer 111, the first layer 113, and the second conductive layer 112 are sequentially stacked along a first direction Z and then wound to form the electrode assembly 10. In this application, the first direction Z is a direction perpendicular to one surface of the first metal plate 101. In FIG. 2A, the stack 11 is wound counterclockwise around a winding shaft. Viewed along the first direction Z, the second conductive layer 112 is located at the outermost layer of the electrode assembly 10. The second conductive layer 112 may be a negative electrode, and the first conductive layer 111 may be a positive electrode.

The first layer 113 is used to prevent the first conductive layer 111 and the second conductive layer 112 from being in direct contact so as to reduce the risk of contact short circuit between the first conductive layer 111 and the second conductive layer 112. The first layer 11 includes an insulating material. The insulating material is selected from at least one of polypropylene, polyethylene, polyvinylidene difluoride, vinylidene fluoride-hexafluoropropylene copolymer, polymethyl methacrylate, or polyethylene glycol. The first layer 113 may be a separator.

In some embodiments, at least a portion of the inner surface of the housing 20 facing the surface of the electrode assembly can have a conductive material to improve the mechanical strength of the housing 20. The housing 20 may be a metal shell such as a steel shell or an aluminum shell. In some other embodiments, the housing 20 may alternatively be a packaging bag obtained by encapsulation with a packaging film, meaning the battery 100 is a pouch cell.

Refer to FIG. 1B. In some embodiments, the housing 20 includes a first portion 201 and a second portion 202 that are oppositely disposed. In the first direction Z, the first portion 201 wraps at least a portion of the electrode assembly 10 and forms an accommodation space 203, while the second portion 202 covers the electrode assembly 10 and seals the accommodation space 203. The first portion 201 and the second portion 202 may be directly connected or may be indirectly connected through an adhesive agent or the like to seal the accommodation space 203. The first metal plate 101 is connected to the stack 11 (see FIG. 2A) and extends from the junction of the first portion 201 and the second portion 202 out of the housing 20. The first metal plate 101 can be used to connect the stack 11 to an external device. The second metal plate 102 is connected to the stack 11 and extends from the junction of the first portion 201 and the second portion 202 out of the housing 20. The second metal plate 102 can be used to connect the stack 11 to an external device. In this application, a third direction Y is a direction in which the first metal plate 101 or the second metal plate 102 protrudes from the stack 11 and also is a direction in which the first metal plate 101 or the second metal plate 102 extends out of the housing 20. A second direction X is a direction perpendicular to both the first direction Z and the third direction Y.

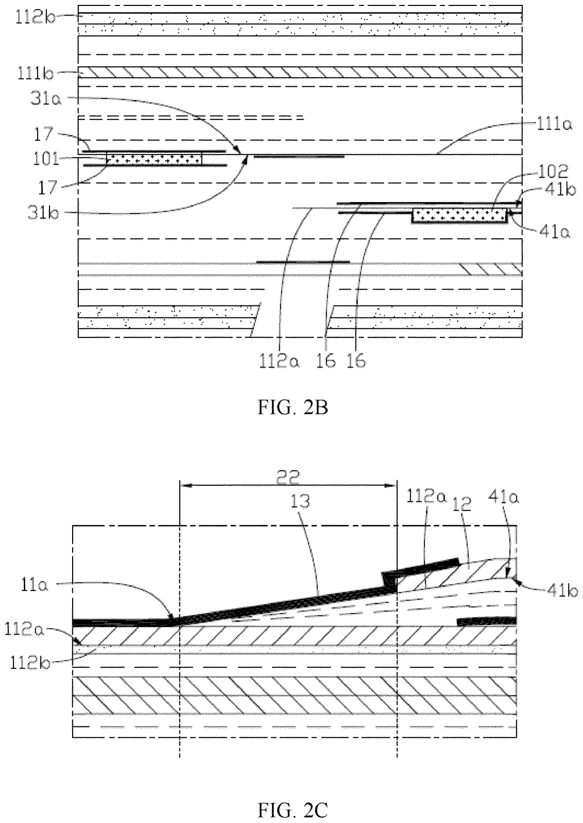

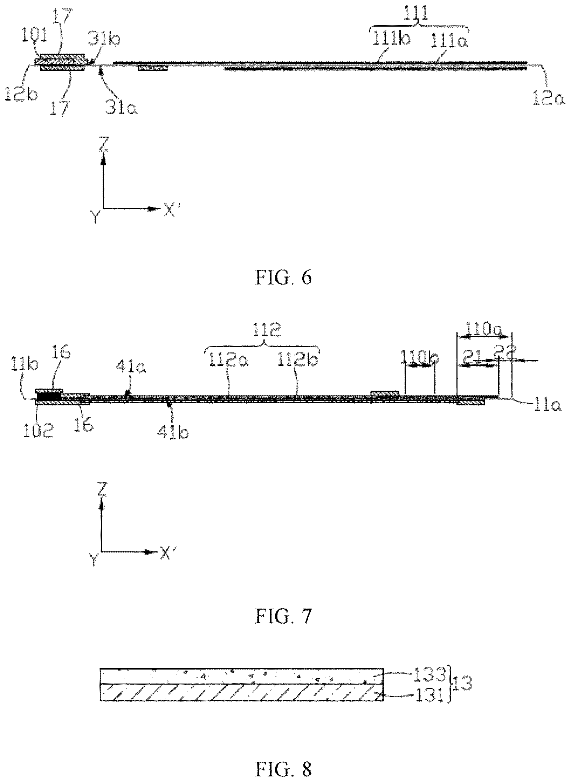

Refer to FIG. 2A, FIG. 2B, and FIG. 6 together. The first conductive layer 111 includes a first metal layer 111a and a first conductive material layer 111b disposed on the first metal layer 111a. The first metal layer 111a includes a first surface 31a and a second surface 31b that are oppositely disposed. The first surface 31a and the second surface 3 1b each include a region provided with the first conductive material layer 111b and a region apart from the first conductive material layer 111b. The first metal layer 111a may be a current collector having a function of collecting current and may include at least one of Ni, Ti, Cu, Ag, Au, Pt, Fe, Co, Cr, W, Mo, Al, Mg, K, Na, Ca, Sr, Ba, Si, Ge, Sb, Pb, In, Zn, or a combination thereof. The first conductive material layer 111b functions as an active layer and may include at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadium phosphate, a lithium-rich manganese-based material, lithium nickel cobalt aluminum oxide, or a combination thereof. Viewed along the first direction Z, the first surface 31a of each first metal layer 111a is closer to the winding center of the electrode assembly 10 than the second surface 31b thereof. In the fourth direction X', the first metal layer 111a includes a first end 12a and a second end 12b that are oppositely disposed. The first end 12a serves as the trailing end for winding the first conductive layer 111, while the second end 12b serves as the starting end for winding the first conductive layer 111. In this application, the fourth direction X' is perpendicular to the third direction Y, being an extension direction of the first conductive layer 111 before winding and also a direction extending from a first region 110a to a second region 110b of the first surface 110.

Refer to FIG. 2A, FIG. 2B, and FIG. 7 together. The second conductive layer 112 includes a second metal layer 112a and a second conductive material layer 112b positioned on the second metal layer 112a. The second metal layer 112a includes a third surface 41a and a fourth surface 41b that are oppositely disposed. The third surface 41a and the fourth surface 41b each include a region provided with the second conductive material layer 112b and a region apart from the second conductive material layer 112b. The second metal layer 112a functions as a current collector and may include at least one of Ni, Ti, Cu, Ag, Au, Pt, Fe, Co, Cr, W, Mo, Al, Mg, K, Na, Ca, Sr, Ba, Si, Ge, Sb, Pb, In, Zn, or a combination thereof. The second conductive material layer 112b functions as an active layer and may be selected from at least one of a graphite material, alloy material, lithium metal, or alloys thereof. The graphite material may be selected from at least one of artificial graphite or natural graphite. The alloy material may be selected from at least one of silicon, silicon oxide, tin, or titanium sulfide. The second metal plate 102 is welded to a region of the third surface 41a that is apart from the first conductive material layer 111b. Viewed along the first direction Z, the fourth surface 41b is closer to the winding center of the electrode assembly 10 than the third surface 41a.

Refer to FIG. 2A, FIG. 2C, and FIG. 7 together. In the fourth direction X', the second metal layer 112a includes a first end portion 11a and a second end portion 11b that are oppositely disposed. After the stack 11 is wound from the first direction Z to the second direction X, a portion of the region on the third surface 41a apart from the second conductive material layer 112b forms the first surface 110 of the electrode assembly 10. The first surface 110 is a surface of the stack 11 along the first direction Z. The first end portion 11a is located on the first surface 110, and the second end portion 11b is located at the center of the electrode assembly 10. The second end portion 11b serves as the starting end for winding the second conductive layer 112, and the first end portion 11a serves as the trailing end for winding the second conductive layer 112. Viewed along the first direction Z, the first surface 110 includes a first region 110a on a first side X1 of the first end portion 11a in the second direction X and a second region 110b on a second side X2 of the first end portion 11a opposite to the first side X1 in the second direction X. In the winding direction of the stack 11 (that is, in the fourth direction X' of the second conductive layer 112 being unwound), the first region 110a is closer to the first end portion 11a than the second region 110b.

The electrode assembly 10 further includes a second layer 12. The second layer 12 covers a portion of the region of the third surface 41a apart from the first conductive material layer 111b. The stack 11 further includes a second surface 120 located opposite to the first surface 110 in the first direction Z. The second layer 12 covers a portion of the first surface 110 and the second surface 120. The second layer 12 includes a ceramic material and a binder. The ceramic material includes at least one of Al₂O₃, TiO2, MgO, SiO₂, ZrO₂, CaO, or boehmite, and the binder may include polyvinylidene difluoride (PVDF). The second layer 12 is disposed such that the first metal layer 111a does not come into contact with the second metal layer 112a when the conductive layers are broken due to external forces or other factors experienced by the electrode assembly 10, so as to reduce the risk of momentary high heat accumulation and enhance the safety.

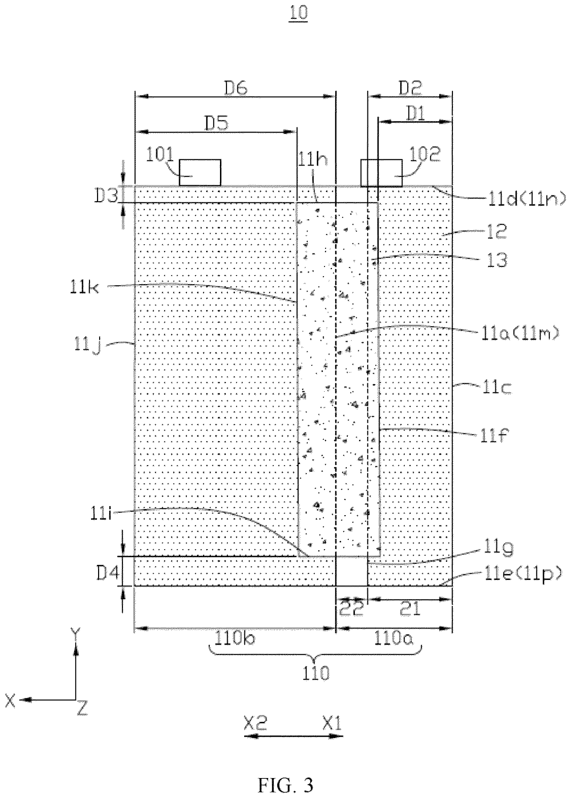

The first region 110a further includes a first zone 21 and a second zone 22. The first zone 21 is covered by the second layer 12, and the second zone 22 is exposed outside the second layer 12 and apart from the second layer 12. Refer to FIG. 2A, FIG. 2C, and FIG. 3 together. The electrode assembly 10 further includes a third layer 13. The third layer 13 is disposed on the first surface 110. Viewed along the first direction Z, the third layer 13 is connected to the first region 110a and the second region 110b, and has an overlapping portion with the first end portion 11a. The third layer 13 includes an insulating material. Refer to FIG. 8. The third layer 13 includes a substrate 131 and an adhesive layer 133 disposed on the substrate 131. The substrate 131 includes at least one of polyethylene terephthalate, polyimide, polyvinyl chloride, polypropylene, polyethylene, and a combination thereof. The adhesive layer 133 includes at least one of acrylic ester, polyurethane, rubber, or silicone gel. The third layer 13 is disposed such that the first end portion 1 1a is fastened to the first surface 110, reducing the risk of the electrode assembly 10 being pulled apart by internal forces.

The third layer 13 has an overlapping portion with the second zone 22. The third layer 13 is attached to part of the second zone 22, and the third layer 13 and the second zone 22 have an adhesive force, such that the third layer 13 can be adhered to the first surface 110, further reducing the risk of the electrode assembly 10 being pulled apart at the first end portion 11a by internal forces.

Refer to FIG. 2A, FIG. 2B, and FIG. 6 together. The first metal plate 101 is welded to the region of the second surface 3 1b apart from the first conductive material layer 111b. A welding mark (not shown in the figure) is formed between the first metal plate 101 and the second surface 31b. A seventh layer 17 is provided on both the first surface 31a and the second surface 3 1b in regions that are apart from the first conductive material layer 111b. Specifically, one seventh layer 17 is disposed on the second surface 31b and covers the welding mark on the first metal plate 101, and the other seventh layer 17 is disposed on the first surface 31a and covers a region of the first surface 31a opposite the welding mark on the first metal plate 101. This arrangement reduces the cases of piercing the first layer 113 due to welding mark burrs and minimizes the risk of contact short circuit between the first conductive layer 111 and the second conductive layer 112. The seventh layer 17 includes an insulating material, where the insulating material is selected from at least one of polyethylene, polypropylene, phenolic resin, melamine resin, unsaturated polyester resin, epoxy resin, silicone resin, or polyurethane.

Refer to FIG. 2A, FIG. 2B, and FIG. 7 together. The second metal plate 102 is welded to the region of the third surface 41a apart from the first conductive material layer 111b. A sixth layer 16 is provided on both the third surface 41a and the fourth surface 41b in regions that correspond to the second metal plate 102. Specifically, one sixth layer 16 is disposed on the third surface 41a and covers the welding mark on the second metal plate 102, and the other sixth layer 16 is disposed on the fourth surface 41b and covers the region the fourth surface 41b opposite the welding mark on the second metal plate 102. This arrangement reduces the cases of piercing the first layer 113 due to welding mark burrs and minimizes the risk of contact short circuit between the first conductive layer 111 and the second conductive layer 112.

Refer to FIG. 3. Viewed along the first direction Z, the first surface 110 includes a third end portion 11c on a first side X1 of the first end portion 11a in the second direction X, and a tenth end portion 11j on second side X2 of the first end portion 11a opposite to the first side X1 in the second direction X. The first end portion 11a extends along the third direction Y, and the tenth end portion 11j also extends along the third direction Y. The second zone 22 is located between the first end portion 11a and the third end portion 11c. Specifically, in the second direction X, the second zone 22 is located between the first end portion 11a and the first zone 21, and the second zone 22 extends from the first end portion 11a. Viewed along the first direction Z, in the third direction Y, the first surface 110 has a fourth end portion 11d and a fifth end portion 11e located opposite to the fourth end portion 11d. In the third direction Y, the fourth end portion 11d and the fifth end portion 11e are the edges of the stack. The second zone 22 extends from the fourth end portion 11d toward the fifth end portion 11e.

Viewed along the first direction Z, the third layer 13 includes a sixth end portion 11f located on the side of the third end portion 11c in the second direction X and extending along the third direction Y and an eleventh end portion 11k located on the side of the tenth end portion 11j in the second direction X and extending along the third direction Y. The second zone 22 includes a seventh end portion 11g located on the side of the third end portion 11c in the second direction X and extending along the third direction Y and a twelfth end portion 11m located on the side of the tenth end portion 11j in the second direction X and extending along the third direction Y. In this embodiment, viewed along the first direction Z, the twelfth end portion 11m has an overlapping portion with the first end portion 11a. Viewed along the first direction Z, the third layer 13 has overlapping portions with both the seventh end portion 11g and the eleventh end portion 11k. A first distance D1 from the sixth end portion 11f to the third end portion 11c is shorter than a second distance D2 from the seventh end portion 11g to the third end portion 11c, and a fifth distance D5 from the eleventh end portion 11k to the tenth end portion 11j is shorter than a sixth distance D6 from the twelfth end portion 11m to the tenth end portion 11j. With the contact area between the third layer 13 and the second zone 22 increased, the adhesive force between the third layer 13 and the second zone 22 is enhanced, and the area of the second zone 22 exposed in the electrolyte is reduced, thereby reducing the electrolyte remaining in the second zone 22 and minimizing the influence of the electrolyte remaining in the second zone 22 on the shape of the packaging film when the electrode assembly is packaged by the packaging film. In this application, the third direction Y is perpendicular to both the first direction Z and the second direction X and represents the extension direction of the first metal plate 101 or the second metal plate 102 itself.

Viewed along the first direction Z, the third layer 13 further includes an eighth end portion 11h located on the side of the fourth end portion 11d in the third direction Y and extending along the first direction X and a ninth end portion 11i located on the side of the fifth end portion 11e in the third direction Y and extending along the first direction X. A third distance D3 from the eighth end portion 11h to the fourth end portion 11d is shorter than a fourth distance D4 from the ninth end portion 11i to the fifth end portion 11e. Viewed along the first direction Z, the second zone 22 includes, in the third direction Y, a thirteenth end portion 11n located on the side of the fourth end portion 11d and extending along the first direction X and a fourteenth end portion 11p located on the side of the fifth end portion 11e and extending along the first direction X. The thirteenth end portion 11n has an overlapping portion with the fourth end portion 11d, and the fourteenth end portion 11p has an overlapping portion with the fifth end portion 11e.

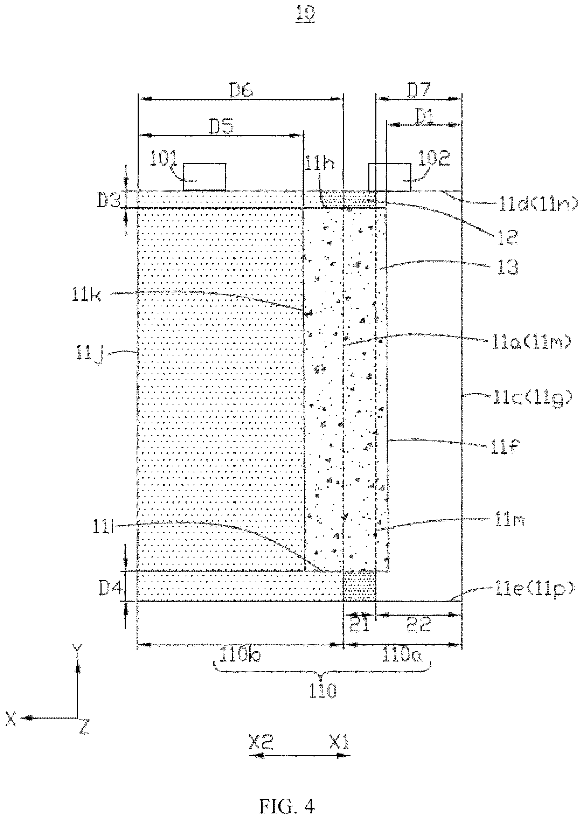

Refer to FIG. 4. In some embodiments, in the second direction X, the first zone 21 is disposed between the second zone 22 and the first end portion 11a, causing the second zone 22 to be apart from the first end portion 11a. Viewed along the first direction Z, the seventh end portion 11g of the second zone 22 has an overlapping portion with the third end portion 11c of the first surface 110. A seventh distance D7 from the twelfth end portion 11m to the third end portion 11c of the second zone 22 is longer than the first distance D1 from the sixth end portion 11f to the third end portion 11c of the third layer 13. This further enhances the adhesive force between the third layer 13 and the electrode assembly 10.

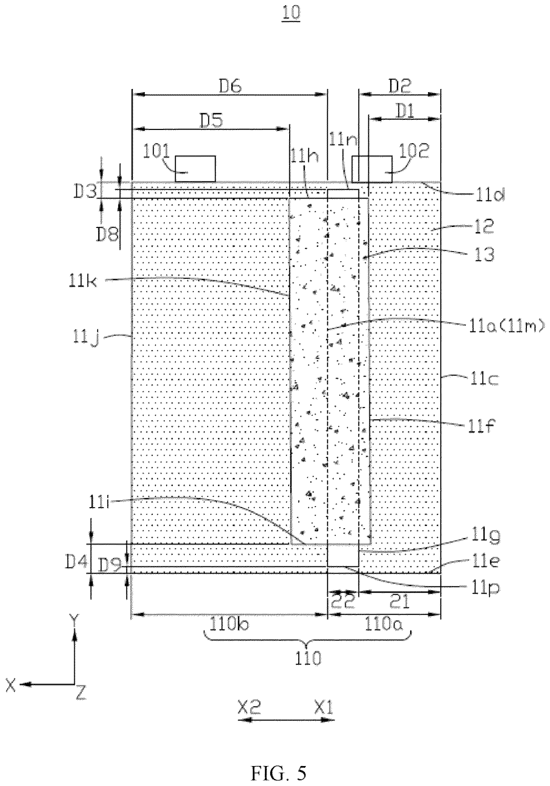

Refer to FIG. 5, in some embodiments, the second zone 22 is apart from the fourth end portion 11d and the fifth end portion 11e of the first surface 110. Viewed along the first direction Z, a eighth distance D8 from the thirteenth end portion 11n to the fourth end portion 11d of the second zone 22 is shorter than a third distance D3 from the eighth end portion 111h to the fourth end portion 11d of the third layer 13; and a ninth distance D9 from the fourteenth end portion 11p to the fifth end portion 11e of the second zone 22 is shorter than a fourth distance D4 from the ninth end portion 11i of the third layer 13. In other embodiments, the eighth distance D8 from the thirteenth end portion 11n to the fourth end portion 11d may be longer than the third distance D3 from the eighth end portion 11h to the fourth end portion 11d, and the ninth distance D9 from the fourteenth end portion 11p to the fifth end portion 11e can be longer than the fourth distance D4 from the ninth end portion 11i. This balances the costs while maintaining a good level of adhesive force between the third layer 13 and the electrode assembly 10.

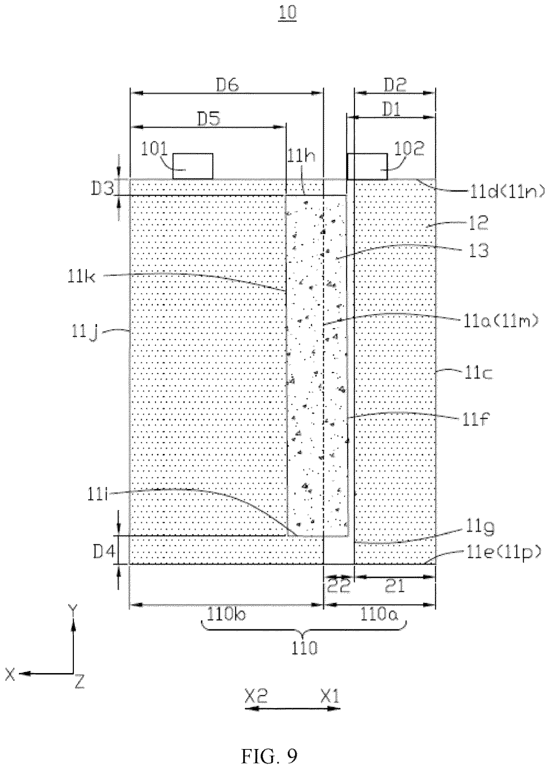

Refer to FIG. 9, in some embodiments, viewed along the Z direction, in the first direction X, the third layer 13 partially has an overlapping portion with the second zone 22, and is apart from the first zone 21 and the seventh end portion 11g. Specifically, the first distance D1 from the sixth end portion 11f to the third end portion 11c of the third layer 13 is longer than the second distance D2 from the seventh end portion 11g to the third end portion 11c of the second zone 22. This reduces the adverse effect on the thickness of the stack 11 when the third layer 13 has an overlapping portion with the first zone 21 along the first direction Z.

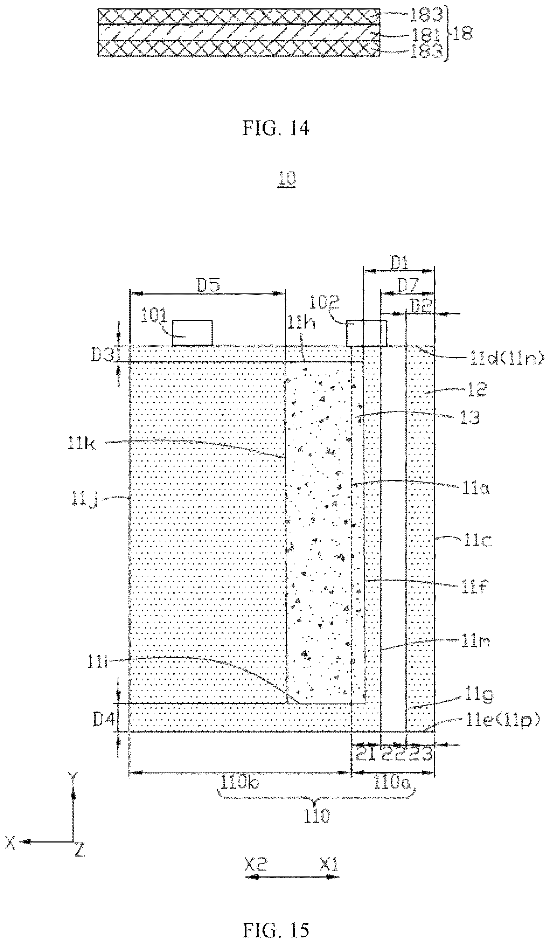

Refer to FIG. 15, in some embodiments, the first surface 110 further includes a third zone 23. The third zone 23 is covered by the second layer 12 and apart from the first zone 21. Specifically, viewed along the first direction Z, in the second direction X, the second zone 22 is disposed between the first zone 21 and the third zone 23. The second distance D2 from the seventh end portion 11g to the third end portion 11c of the second zone 22 and the seventh distance D7 from the twelfth end portion 11m to the third end portion 11c of the second zone 22 are both shorter than the first distance D1 from the sixth end portion 11f to the third end portion 11c of the third layer 13. In other embodiments, the second distance D2 from the seventh end portion 11g to the third end portion 11c and the seventh distance D7 from the twelfth end portion 11m to the third end portion 11c may be longer than the first distance D1 from the sixth end portion 11f to the third end portion 11c, or the first distance D1 from the sixth end portion 11f to the third end portion 11c may be smaller than the seventh distance D7 from the twelfth end portion 11m to the third end portion 11c and larger than the second distance D2 from the seventh end portion 11g to the third end portion 11c.

In some embodiments, the first surface 110 may further include a fourth zone (not shown in the figure), which is exposed on the outside of the second layer 12 and apart from the second layer 12. Viewed along the first direction Z, in the second direction X, the second zone 22 and the fourth zone are positioned on opposite sides of the first zone 21 or the third zone 23.

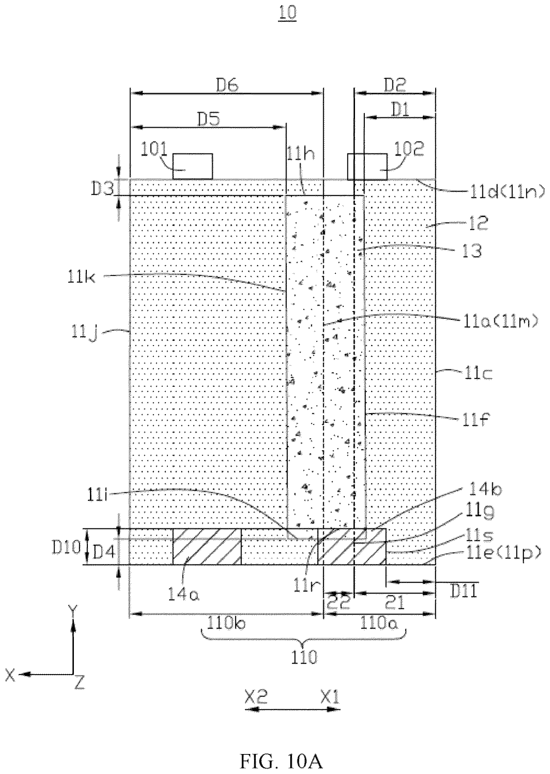

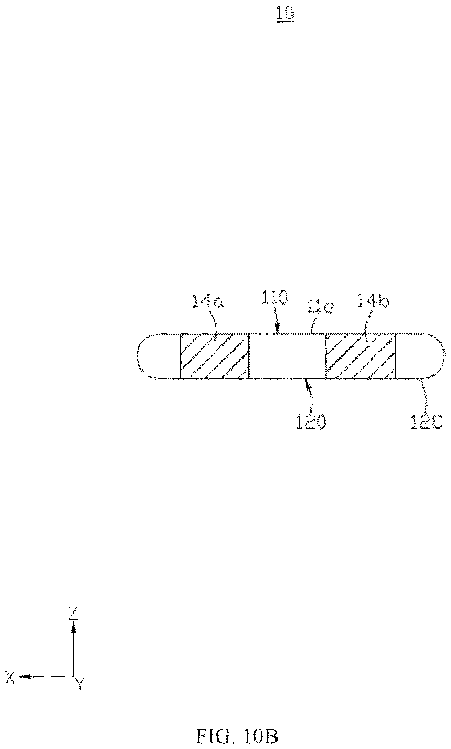

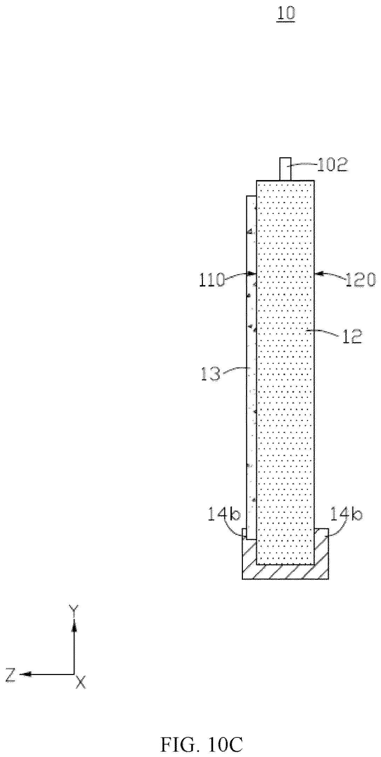

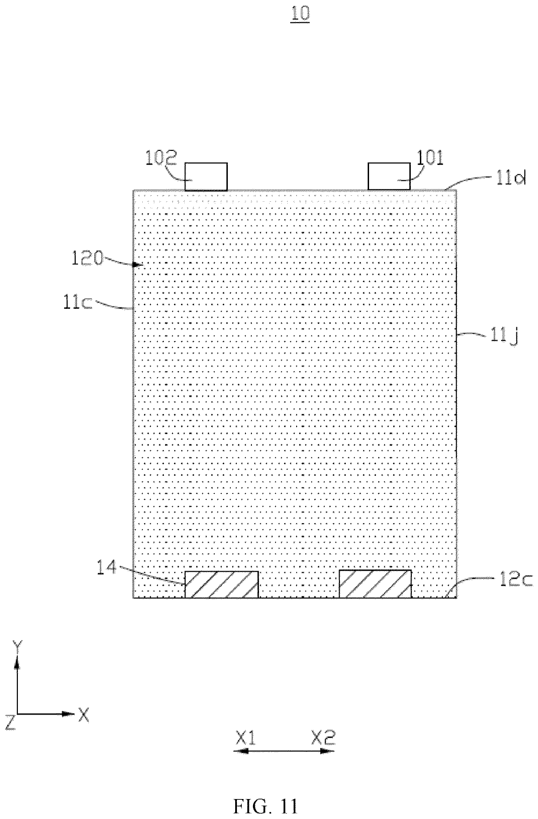

Refer to FIG. 10A, FIG. 10B, FIG. 10C, and FIG. 11, in some embodiments, the electrode assembly 10 further includes two fourth layers 14a and 14b. The two fourth layers 14a and 14b are both disposed on the first surface 110 of the electrode assembly. Viewed along the third direction Y, in the first direction Z, the second surface 120 has a third end portion 12c opposite to the fifth end portion 11e. Viewed along the first direction Z, the two fourth layers 14a and 14b extend from the fifth end portion 11e of the first surface 110 and the third end portion 12c of the second surface 120 respectively to the second surface 120 of the electrode assembly. Viewed along the second direction X, the two fourth layers 14a and 14b extend a predetermined distance from the fifth end portion 11e of the first surface 110 and the third end portion 12c of the second surface 120 in the third direction Y respectively. Viewed along the third direction Y, in the first direction Z, the two fourth layers 14a and 14b are disposed from the fifth end portion 11e to the third end portion 12c. The fourth layers 14a and 14b are disposed such that the electrode assembly can be further fastened, reducing the risk of the electrode assembly being pulled apart by internal forces and further reducing the risk of detachment of the third layer 13. The two fourth layers 14a and 14b each include an insulating material. The insulating material is selected from at least one of polyethylene, polypropylene, phenolic resin, melamine resin, unsaturated polyester resin, epoxy resin, silicone resin, or polyurethane.

Viewed along the first direction Z, in the third direction Y, the third layer 13 has an overlapping portion with the fourth layer 14b and is apart from the fourth layer 14a. Viewed along the first direction Z, the fourth layer 14b includes a fifteenth end portion 11r located on the side of the fifth end portion 11e in the third direction Y and extending in the first direction X. A tenth distance D10 from the fifteenth end portion 11r to the fifth end portion 11e is longer than the fourth distance D4 from the ninth end portion 11i to the fifth end portion 11e. Viewed along the first direction Z, the fourth layer 14b has an overlapping portion with the second zone 22, and the fourth layer 14a is apart from the second zone 22. The fourth layer 14b is connected to the first end portion 11a. Viewed along the first direction Z, the fourth layer 14b includes a sixteenth end portion 11s located on the side of the third end portion 11c in the second direction X and extending in the third direction Y. The first distance D1 from the sixth end portion 11f to the third end portion 11c is longer than the eleventh distance D11 from the sixteenth end portion 11s to the third end portion 11c. Arrangement of the fourth layer 14b overlapping with the third layer 13 can reduce the risk of the edge of the third layer 13 being warped or peeling off due to the impact of the electrolyte or the friction with the housing 20 during the drop process.

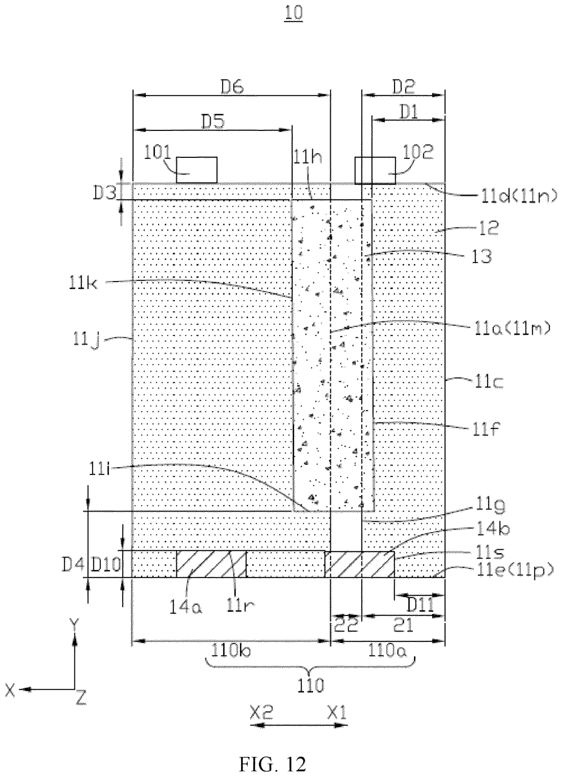

Refer to FIG. 12, in some embodiments, the fourth layer 14b is apart from the third layer 13 in the third direction Y. Viewed along the first direction Z, a tenth distance D10 from the fifteenth end portion 11r to the fifth end portion 11e is shorter than the fourth distance D4 from the ninth end portion 11i to the fifth end portion 11e.

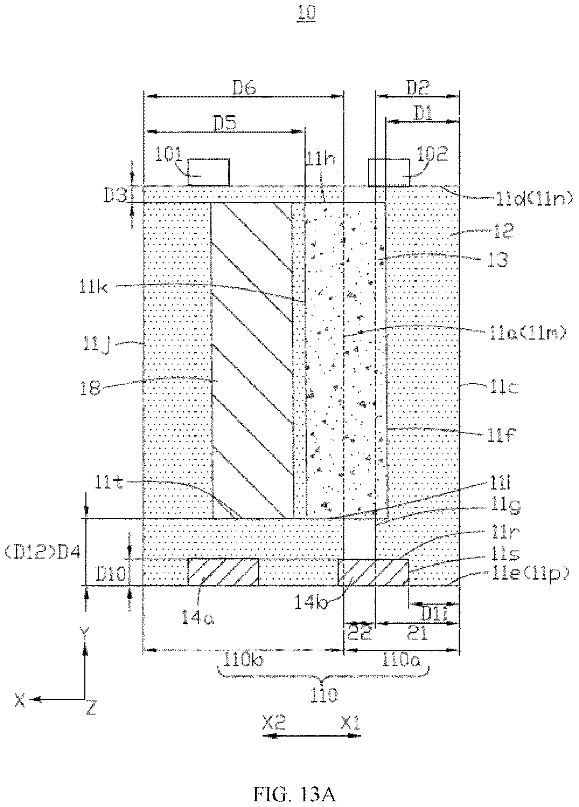

Refer to FIG. 13A. In some embodiments, the electrode assembly 10 further includes an eighth layer 18 disposed in the second region 110b. Viewed along the first direction Z, the eighth layer 18 is apart from all of the first end portion 11a, the third layer 13, and the two fourth layers 14a and 14b. The eighth layer 18 includes an insulating material, and the electrode assembly 10 is connected to the inner surface of the housing through the eighth layer 18 to fasten the electrode assembly within the housing. Viewed along the first direction Z, the eighth layer 18 includes a seventeenth end portion 11t located on the side of the fifth end portion 11e in the third direction Y and extending in the second direction X. In this embodiment, in the second direction X, the ninth end portion 11i of the third layer 13 is aligned with the seventeenth end portion 11t of the eighth layer 18. Viewed along the first direction Z, a twelfth distance D12 from the seventeenth end portion 11t to the fifth end portion 11e is longer than the tenth distance D10 from the fifteenth end portion 11r to the fifth end portion 11e.

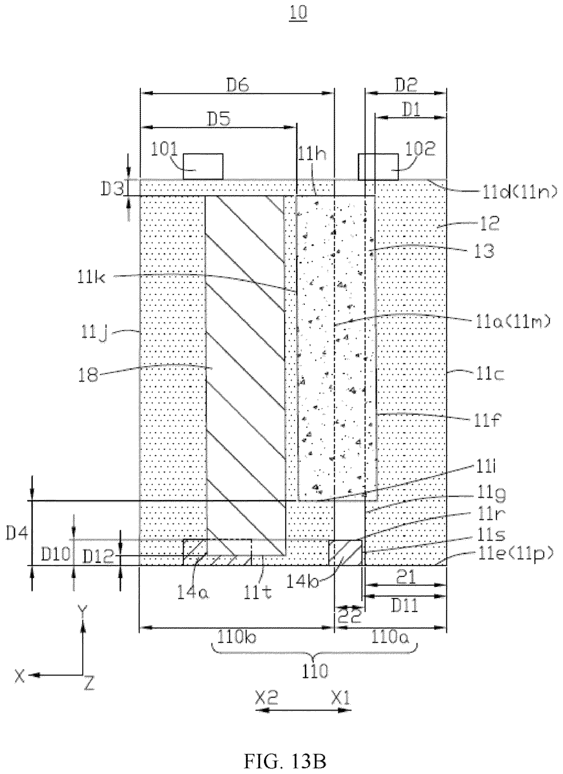

Refer to FIG. 13B. In some embodiments, viewed along the first direction Z, the eighth layer 18 has an overlapping portion with the fourth layer 14a in the third direction Y and is apart from the fourth layer 14b. Viewed along the first direction Z, in the third direction Y, the first distance D1 from the sixth end portion 11f to the third end portion 11c is longer than the tenth distance D10 from the eleventh end portion 11k to the third end portion 11c; and in the second direction X, the first distance D1 from the sixth end portion 11f to the third end portion 11c is longer than the eleventh distance D11 from the sixteenth end portion 11s to the third end portion 11c. In other embodiments, the eighth layer 18 may also overlap with the third layer 13 in the second direction X.

Refer to FIG. 14. The eighth layer 18 includes a substrate 181 and adhesive layers 183 disposed on opposing surfaces of the substrate 181. The substrate 181 includes at least one of polyethylene terephthalate, polyimide, polyvinyl chloride, polypropylene, polyethylene, and a combination thereof. The adhesive layer 183 includes at least one of acrylic ester, polyurethane, rubber, or silicone gel.

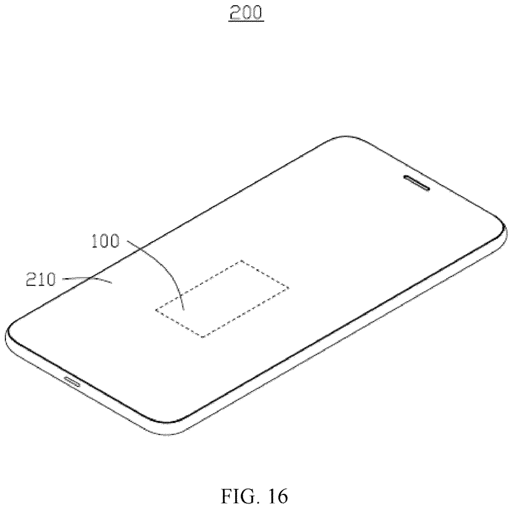

Refer to FIG. 16. An embodiment of this application further provides an electronic apparatus 200. The electronic apparatus 200 includes a main body 220 and a battery 100. The battery 100 is accommodated in the main body 220. The electronic apparatus 200 may be, for example, a mobile phone, tablet, or e-reader.

In this application, the electronic apparatus 200 is illustrated as a mobile phone. The battery 100 is disposed in the mobile phone to provide power for operation of the mobile phone, and the main body 220 represents the structure of the mobile phone. It should be understood that in other embodiments, the electronic apparatus 200 may also have other structures, not limited to the aforementioned mobile phone, tablet, or e-reader.

In this application, the second zone not covered by the second layer is disposed on the first region of the first surface of the electrode assembly such that the third layer can be attached to the second zone, enhancing the adhesive force and reducing the risk of detachment of the third layer. Moreover, arrangement of the second zone reduces the thickness of the stack and decreases the loss of energy density.

The battery performance provided by this application will be described below with specific examples and comparative examples.

### Example 1

The electrode assembly 10, as shown in FIG. 3, was placed in the housing, followed by electrolyte injection, sealing, and formation to obtain a finished battery. In this example, the first distance D1 from the sixth end portion 11f of the third layer 13 to the third end portion 11c of the first region 110a is shorter than the second distance D2 from the seventh end portion 11g to the third end portion 11c of the second zone 22.

### Example 2

The electrode assembly 10, as shown in FIG. 9, was placed in the housing, followed by electrolyte injection, sealing, and formation to obtain a finished battery. In this example, the first distance D1 from the sixth end portion 11f of the third layer 13 to the third end portion 11c of the first region 110a is longer than the second distance D2 from the seventh end portion 11g to the third end portion 11c of the second zone 22.

### Example 3

The electrode assembly 10, as shown in FIG. 12, was placed in the housing, followed by electrolyte injection, sealing, and formation to obtain a finished battery. In this example, the first distance D1 from the sixth end portion 11f of the third layer 13 to the third end portion 11c of the first region 110a is shorter than the second distance D2 from the seventh end portion 11g to the third end portion 11c of the second zone 22. The fourth layer 14 has an overlapping portion with the second zone 22, and the third layer 13 is apart from the fourth layer 14 in the third direction Y.

### Example 4

The electrode assembly 10, as shown in FIG. 10 and FIG. 11 was placed in the housing, followed by electrolyte injection, sealing, and formation to obtain a finished battery. In this example, the first distance D1 from the sixth end portion 11f of the third layer 13 to the third end portion 11c of the first region 110a is shorter than the second distance D2 from the seventh end portion 11g to the third end portion 11c of the second zone 22. The fourth layer 14 has an overlapping portion with the second zone 22, and the third layer 13 has an overlapping portion with the fourth layer 14 in the third direction Y.

### Example 5

The electrode assembly 10, as shown in FIG. 13, was placed in the housing, followed by electrolyte injection, sealing, and formation to obtain a finished battery. In this example, the first distance D1 from the sixth end portion 11f of the third layer 13 to the third end portion 11c of the first region 110a is shorter than the second distance D2 from the seventh end portion 11g to the third end portion 11c of the second zone 22. The fourth layer 14 has an overlapping portion with the second zone 22, and the third layer 13 is apart from the fourth layer 14 in the third direction Y. Additionally, the seventh layer 17 is apart from the first end portion 11a, the third layer 13, and the fourth layer 14.

### Comparative Example 1

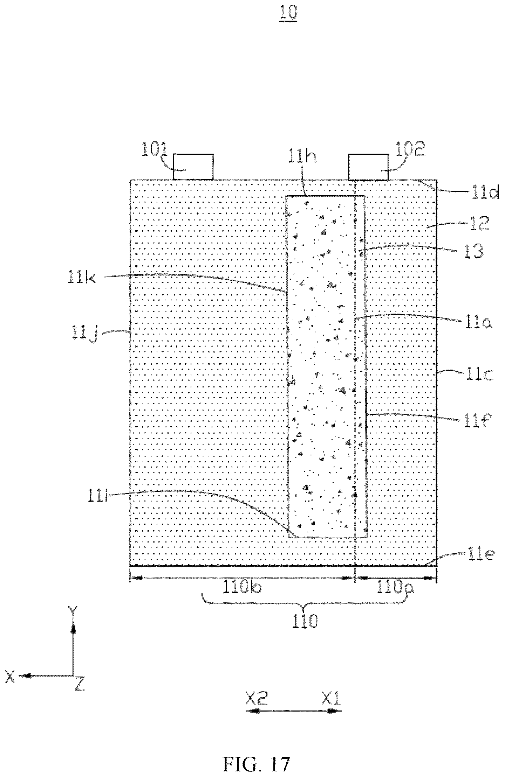

The electrode assembly 10, as shown in FIG. 17 was placed in the housing, followed by electrolyte injection, sealing, and formation to obtain a finished battery. Compared with the electrode assembly 10 shown in FIG. 3, in the electrode assembly 10 shown in FIG. 17, the first region 110a does not include the second zone 22.

Five samples were taken from each group of batteries of the examples and comparative examples and subjected to nail penetration test and cycle test. The test results are shown in Table 1.

Nail Penetration Test: The battery samples were placed in a thermostat at 25°C, left standing 30 minutes to allow the temperature of the batteries to reach the constant temperature. The batteries with the temperature reached the constant temperature were then charged at a constant current of 0.5C to the cut-off voltage and then charged at a constant voltage of the cut-off voltage to a current of 0.025C. The fully charged batteries were transferred to a nail penetration test machine, and the test environment temperature was maintained at 25°C±2°C. A steel nail with a diameter of 2.45 mm, a length of 45 mm, and a tip length ranging from 2 mm to 4.9 mm, was driven into the central part of the battery at a speed of 150 mm/s until it penetrated completely. After a 10-minute dwell, the nail was withdrawn. The occurrence of fire or explosion of the battery during the test was considered a failure, and the pass rate of the nail penetration test was recorded.

Cycle Test: The battery samples were charged at a current of 0.2C at room temperature, discharged to the cut-off voltage, and then charged at voltage and a constant current of 0.8C to the limit voltage. The appearance of the battery was observed for any abnormalities (such as local thickness increase). The batteries were then subjected to 1000 cycles of charge and discharge at 0.8C/1C, and the appearance of the batteries was observed for any abnormalities (such as local thickness increase). The batteries were then disassembled to observe whether the third layer was peeled off the electrode assembly and to observe the interface of the second conductive layer. The appearance deformation of the battery, peeling off of the third layer, and interface condition of the second conductive layer were recorded.

**Table 1**

| | Pass rate of nail penetration test | Appearance deformation in cycle test | Peeling off of third layer in cycle test | Interface condition of second conductive layer in cycle test |
|---|---|---|---|---|
| Example 1 | 5/5 | No obvious deformation | 0/5 | Overall good interface |
| Example 2 | 3/5 | No obvious deformation | 0/5 | Overall good interface |
| Example 3 | 5/5 | No obvious deformation | 0/5 | Overall good interface |
| Example 4 | 5/5 | The thickness of the battery at the overlapping portion between the third layer and the fourth layer is thicker than that of other parts | 0/5 | Lithium precipitation occurs at the overlapping portion between the third layer and the fourth layer |
| Example 5 | 5/5 | No obvious deformation | 0/5 | Overall good interface |
| Comparative Example 1 | 5/5 | The battery presents a wavy deformation in the second direction X | 5/5 | Lithium precipitation appears on the whole interface |

| | | | | |
|---|---|---|---|---|
| Note: X/5 means that in five samples tested, the number of samples passed the nail penetration test or experienced peeling off of the third layer was X. | | | | |

It can be observed from the test results in Table 1 that, by comparing Examples 1 to 5 to Comparative Example 5, the second zone uncovered by the second layer is disposed on the first region of the first surface of the electrode assembly and the third layer is directly connected to the second zone, such that after the cycle test, a probability of deformation is low a probability of peeling off of the third layer is low, and an overall interface condition is maintained well, while ensuring the pass rate of the nail penetration test.

The descriptions disclosed above are only the preferred embodiments of this application, and do not, certainly, constitute limitation to this application. Accordingly, any equivalent changes made in accordance with this application still fall within the scope of this application.

## Claims

1. An electrode assembly formed by winding a stack, the electrode assembly comprising a first metal plate electrically connected to the stack; wherein the stack comprises a first conductive layer, a second conductive layer, and a first layer disposed between the first conductive layer and the second conductive layer, and the first layer comprises an insulating material; **characterized in that**,
the stack further comprises a first surface, a first end portion, and a second end portion located opposite to the first end portion;
a direction perpendicular to a surface of the first metal plate is a first direction, and viewed along the first direction, the first surface has, in a second direction perpendicular to the first direction, a first region located on a first side of the first end portion and a second region located on a second side of the first end portion; and in a winding direction of the stack, the first region is closer to the first end portion than the second region; and
the first region comprises a first zone and a second zone, wherein the first zone is covered by a second layer comprising an insulating material, and the first region further comprises a third end portion located on the first side of the first end portion in the second direction, wherein the second zone is located between the first end portion and the third end portion, and the second zone is apart from the second layer.

2. The electrode assembly according to claim 1, wherein the second zone is located between the first end portion and the first zone in the second direction.

3. The electrode assembly according to claim 1, wherein the second zone extends from the first end portion in the second direction.

4. The electrode assembly according to claim 1, wherein viewed along the first direction, in a third direction perpendicular to the second direction, the first region has a fourth end portion and a fifth end portion located opposite to the fourth end portion.

5. The electrode assembly according to claim 4, wherein the second zone has a portion extending from the fourth end portion toward the fifth end portion in the third direction.

6. The electrode assembly according to claim 4, wherein the second zone has a portion apart from the fourth end portion or the fifth end portion in the third direction.

7. The electrode assembly according to claim 2, wherein the electrode assembly further comprises a third layer comprising an insulating material, the third layer being disposed on the first surface; and viewed along the first direction, the third layer is connected to the first region and the second region and has an overlapping portion with the first end portion.

8. The electrode assembly according to claim 7, wherein viewed along the first direction, the third layer has an overlapping portion with the second zone.

9. The electrode assembly according to claim 8, wherein the third layer comprises a sixth end portion located on the side of the third end portion in the second direction, and the second zone comprises a seventh end portion located on the side of the third end portion in the second direction; wherein a first distance from the sixth end portion to the third end portion is shorter than a second distance from the seventh end portion to the third end portion.

10. The electrode assembly according to claim 8, wherein viewed along the first direction, in a third direction perpendicular to the second direction, the first region has a fourth end portion and a fifth end portion located opposite to the fourth end portion.

11. The electrode assembly according to claim 10, wherein the third layer further comprises, in the third direction, an eighth end portion located on the side of the fourth end portion and a ninth end portion located on the side of the fifth end portion, wherein a third distance from the eighth end portion to the fourth end portion is shorter than a fourth distance from the ninth end portion to the fifth end portion.

12. The electrode assembly according to claim 10, wherein the electrode assembly further comprises, in the first direction, a second surface opposite to the first surface of the electrode assembly and a fourth layer extending from the first surface through the fifth end portion to the second surface.

13. The electrode assembly according to claim 12, wherein viewed along the first direction, the third layer has an overlapping portion with the fourth layer in the third direction.

14. The electrode assembly according to claim 12, wherein at least a portion of the fourth layer is connected to the first end portion.

15. The electrode assembly according to claim 14, wherein at least a portion of the fourth layer is connected to the second zone.

16. The electrode assembly according to claim 9, wherein the electrode assembly further comprises a fifth layer located in the second region, with both sides of the fifth layer provided with an adhesive layer.

17. The electrode assembly according to claim 16, wherein the fifth layer is apart from the first end portion and the third layer.

18. The electrode assembly according to claim 17, wherein the electrode assembly further comprises, in the first direction, a second surface opposite to the first surface of the electrode assembly and a fourth layer extending from the first surface through the fifth end portion to the second surface, the fifth layer being apart from the fourth layer.

19. The electrode assembly according to claim 1, wherein the first zone is located between the first end portion and the second zone in the second direction.

20. The electrode assembly according to claim 1, wherein the first surface further comprises a second coating zone covered by the second layer and apart from the first zone, the second zone being located between the first zone and the second coating zone in the second direction.

21. The electrode assembly according to claim 1, wherein the first conductive layer comprises at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadium phosphate, a lithium-rich manganese-based material, lithium nickel cobalt aluminum oxide, or lithium titanium oxide.

22. The electrode assembly according to claim 1, wherein the second layer comprises a ceramic material and a binder.

23. The electrode assembly according to claim 1, wherein the third layer comprises a substrate and an adhesive layer disposed on the substrate.

24. The electrode assembly according to claim 23, wherein the substrate comprises at least one of polyethylene terephthalate, polyimide, polyvinyl chloride, polypropylene, polyethylene, and a combination thereof, and the adhesive layer comprises at least one of acrylic ester, polyurethane, rubber, or silicone gel.

25. A battery, wherein the battery comprises the electrode assembly according to any one of claims 1 to 24 and a housing enveloping the electrode assembly, wherein the first metal plate protrudes from one end of the housing.

26. An electronic apparatus comprising the battery according to claim 25.
